# EUROPÄISCHE PATENTANMELDUNG

(11) **EP 3 725 156 A1**
(43) Veröffentlichungstag der Anmeldung: **21.10.2020**
(21) Anmeldenummer: 19170093.9
(22) Anmeldetag: 18.04.2019
(51) Int. Cl.: A21C 15/00, A23G 3/24, A23P 20/17

(54) **VORRICHTUNG ZUM GLASIEREN VON BACKWAREN**

(71) Anmelder: Schumann, Jörg, 35452 Heuchelheim (DE)
(72) Erfinder: Schumann, Jörg, 35452 Heuchelheim (DE)
(74) Vertreter: advotec.

(57) **Zusammenfassung**

Die Erfindung betrifft einen Aufsatz (12) für ein Warmhaltegerät (11) zur Bildung einer Vorrichtung zum Glasieren von Backwaren, wobei das Warmhaltegerät (11) ein Warmhaltebecken (10), das zur Ausbildung einer Entnahmeoberfläche oben offen ausgebildet ist, aufweist und der Aufsatz (12) eine Pumpe (17) und eine Förderleitung (22) aufweist, die in eine Bassinanordnung einmündet, wobei die Bassinanordnung zumindest ein Glasurbecken (24, 25) zur Glasurentnahme aufweist, das mit einer Überlaufvorrichtung zur Rückführung eines dem Warmhaltebecken (10) entnommenen Glasurmassevolumens (20) in das Warmhaltebecken (10) versehen ist, wobei die Überlaufvorrichtung zur Ausbildung einer Anstauhöhe eines temporär in der Bassinanordnung aufgenommenen Bassinvolumens (34) dient.

## Beschreibung

Die Erfindung betrifft einen Aufsatz für ein Warmhaltegerät zur Bildung einer Vorrichtung zum Glasieren von Backwaren, wobei das Warmhaltegerät ein Warmhaltebecken, der zur Ausbildung einer Entnahmeoberfläche oben offen ausgebildet ist, aufweist und der Aufsatz eine Pumpe, eine Förderleitung, eine Haltevorrichtung, mit der der Aufsatz auf dem Warmhaltegerät gehalten wird, und wenigstens ein Motor aufweist, der die Pumpe antreibt, wobei die Pumpe eine Ansaugleitung mit der Förderleitung verbindet und die Förderleitung in eine Bassinanordnung einmündet, wobei die Bassinanordnung zumindest ein Glasurbecken zur Glasurentnahme aufweist, das mit einer Überlaufvorrichtung zur Rückführung eines dem Warmhaltebecken entnommenen Glasurmassevolumens in das Warmhaltebecken versehen ist, wobei die Überlaufvorrichtung zur Ausbildung einer Anstauhöhe eines temporär in der Bassinanordnung aufgenommenen Bassinvolumens dient.

Zum Glasieren von Gebäcken, insbesondere Donuts, ist es üblich, ein herkömmliches Warmhaltegerät einzusetzen, dessen Warmhaltebecken mit der temperierten Glasurmasse befüllt ist, und den eigentlichen Glasurvorgang derart manuell auszuführen, dass von einer Arbeitskraft mit beiden Händen jeweils ein Donut ergriffen und mit seiner nach unten gerichteten Oberseite so weit in die Glasurmasse eingetaucht wird, dass sich ein Glasurüberzug in der gewünschten Größe ergibt. Für die Ausführung des Glasurvorgangs ist es notwendig, dass die Temperatur der Glasurmasse so gewählt wird, dass zum einen eine hinreichende Benetzung und zum anderen nachfolgend eine möglichst schnelle Erstarrung des Glasurüberzugs erfolgt, damit möglichst kurzfristig nach Ausführung des Glasurvorgangs eine Verpackung der Donuts erfolgen kann.

Im Ergebnis wird es daher angestrebt, den Glasurvorgang bei einer möglichst niedrigen Temperatur der Glasurmasse durchzuführen. Aufgrund der großen Entnahmeoberfläche des Warmhaltegeräts und der damit verbundenen Oberflächenabkühlung der Glasurmasse kommt es bei gewünscht niedrigen Temperaturen der Glasurmasse daher zu einer Hautbildung auf der Glasurmasse, so dass die Glasurmasse nicht mehr netzfähig ist. Daher erfolgt in der Praxis ein häufig manuell ausgeführter Rührvorgang. Mit der Durchführung des Rührvorgangs zur Unterdrückung der Hautbildung ist eine Einschränkung der Produktivität des Verfahrens verbunden. Darüber hinaus werden durch den Rührvorgang Oberflächenwellen in der Glasurmasse ausgelöst, die die Erzeugung eines in seiner Größe bzw. Ausgestaltung reproduzierbaren Glasurauftrags behindern.

Der vorliegenden Erfindung liegt daher die Aufgabe zu Grunde, eine Vorrichtung zum Glasieren von Backwaren in einem Eintauchvorgang vorzuschlagen, die eine höhere Produktivität bei der Herstellung qualitativ hochwertiger Glasurüberzüge ermöglicht.

Zur Lösung dieser Aufgabe weist die erfindungsgemäße Vorrichtung die Merkmale des Anspruchs 1 bzw. des Anspruchs 10 auf.

Erfindungsgemäß wird ein Aufsatz für ein Warmhaltegerät zur Bildung einer Vorrichtung zum Glasieren von Backwaren vorgeschlagen, wobei das Warmhaltegerät ein Warmhaltebecken aufweist, das zur Ausbildung einer Entnahmeoberfläche oben offen ausgebildet ist, wobei der Aufsatz eine Pumpe, eine Förderleitung, eine Haltevorrichtung, mit der der Aufsatz auf dem Warmhaltegerät gehalten wird, und wenigstens einen Motor aufweist, der die Pumpe antreibt, wobei die Pumpe eine Ansaugleitung mit der Förderleitung verbindet und die Förderleitung in eine Bassinanordnung einmündet, wobei die Bassinanordnung zumindest ein Glasurbecken zur Glasurentnahme aufweist, das mit einer Überlaufvorrichtung zur Rückführung eines dem Warmhaltebecken entnommenen Glasurmassevolumens in das Warmhaltebecken versehen ist, wobei die Überlaufvorrichtung zur Ausbildung einer Anstauhöhe eines temporär in der Bassinanordnung aufgenommenen Bassinvolumens dient.

Der erfindungsgemäße Aufsatz ermöglicht die Nutzung eines Warmhaltegeräts zur Durchführung eines Glasurvorgangs, ohne dass damit die bislang mit der Nutzung eines Warmhaltegeräts zur Durchführung eines Glasurvorgangs verbundenen Nachteile auftreten. Erreicht wird dies dadurch, dass auf Grund der erfindungsgemäßen Ausgestaltung eines Aufsatzes für das Warmhaltegerät ein dem im Warmhaltebecken aufgenommenen Glasurmassevolumen entnommener kleinerer Volumenanteil für die Durchführung des Glasurvorgangs genutzt wird. Aufgrund der Umleitung eines Teilvolumens des Glasurmassevolumen über die Bassinanordnung kann mittels der Förderung des Volumenanteils durch die Bassinanordnung eine definierte Durchströmung der Bassinanordnung erfolgen, ohne dass damit ein Rührvorgang verbunden wäre.

Darüber hinaus bietet die Bassinanordnung die Möglichkeit, die Größe der Glasurentnahmefläche auf die Größe der mit der Glasur zu versehenden Oberfläche der Backwaren, also etwa der Donuts, abzustimmen, wobei insbesondere eine erhebliche Reduzierung der Größe der Glasurentnahmeoberfläche gegenüber der im Warmhaltebecken des Warmhaltegerätes ausgebildeten Entnahmeoberfläche und damit eine reduzierte Oberflächenabkühlung möglich wird.

Vorzugsweise ist das Glasurbecken als flache Schale ausgebildet mit einer Füllhöhe und einer durch einen Beckenrand begrenzten Beckenentnahmeoberfläche, die jeweils kleiner sind als die Füllhöhe und die Entnahmeoberfläche des Warmhaltebeckens.

Wenn die Bassinanordnung zwei Glasurbecken aufweist, wobei das erste Glasurbecken mit der Förderleitung verbunden ist, und das zweite Glasurbecken das erste Glasurbecken mit der Überlaufvorrichtung verbindet, ist der Aufsatz in Verbindung mit dem Warmhaltegerät besonders für die Durchführung eines durch eine Arbeitskraft erfolgenden beidhändigen Glasurvorgangs geeignet, wobei für beide der parallel in einem Glasurvorgang hergestellten Glasurüberzüge der Backwaren, insbesondere Donuts, identische Glasurbedingungen vorliegen.

Wenn das erste Glasurbecken einen im Beckenboden ausgebildeten zentralen Zulauf zur Verbindung mit der Förderleitung aufweist, wird im ersten Glasurbecken eine überwiegend radiale Strömung erzeugt, die trotz der Zuströmung der Glasurmasse in das erste Glasurbecken eine möglichst ruhige Oberfläche der Glasurmasse ermöglicht.

Vorzugsweise ist die Überlaufvorrichtung durch eine im Beckenrand des zweiten Glasurbeckens ausgebildete, gegenüber dem Beckenrand abgesenkte Überlaufschwelle gebildet, so dass sichergestellt ist, dass innerhalb beider Glasurbecken eine übereinstimmende, definierte Füllstandshöhe erreicht wird, bevor ein Abfluss der Glasurmasse aus der Bassinanordnung erfolgt.

Wenn die Glasurbecken einen kreisring- oder ovalringförmigen Beckenrand aufweisen, ist insbesondere bei der Verwendung der Vorrichtung zum Glasieren von Donuts oder anderen vergleichbaren annähernd kreisrund ausgeführten Backwaren eine möglichst weitreichende Anpassung der Entnahmeoberfläche der Glasurbecken an die Backwarenform möglich. Darüber hinaus wird hierdurch ein strömungstechnisch günstiger Beckenrandverlauf ermöglicht.

Vorzugsweise sind die Glasurbecken über ihre Beckenränder miteinander verbunden, so dass die Glasurbecken möglichst dicht zueinander angeordnet werden können. Wenn die Beckenränder zur Verbindung der Glasurbecken einander gegenüberliegende Randausnehmungen aufweisen, ist ein definierter Strömungsübergang zwischen den Glasurbecken ohne zusätzliche Leitungs- oder Strömungsleitkomponenten gegeben.

Wenn die Ansaugleitung ein Ansaugmundstück mit einem Öffnungsquerschnitt aufweist, der unter einem Ansaugwinkel zu einer Pumpenebene geneigt ist, ist es möglich, dem Ansaugquerschnitt möglichst dicht benachbart zu einer beheizten Wandung des Warmhaltebeckens und insbesondere zu einem Übergang zwischen einer Seitenwand und einer Bodenwand des Warmhaltebeckens anzuordnen, wo ein besonders effektiver Wärmeübergang vom Warmhaltebecken auf die Glasurmasse erfolgt.

Erfindungsgemäß weist die Vorrichtung zum Glasieren von Backwaren die Merkmale des Anspruchs 10 auf.

Nachfolgend wird eine bevorzugte Ausführungsform der Erfindung anhand der Zeichnung näher erläutert.

Es zeigen:
- **Fig. 1**: eine schematische Darstellung einer Ausführungsform eines Aufsatzes für ein Warmhaltegerät in teilweise geschnittener Seitenansicht;
- **Fig. 2**: den in **Fig. 1** dargestellten Aufsatz in Draufsicht.

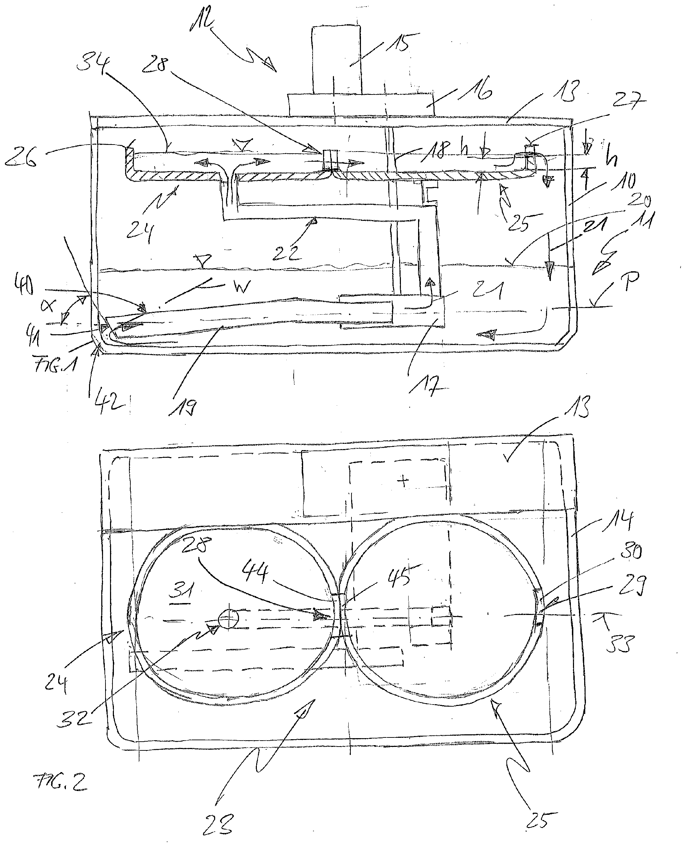

**Fig. 1** zeigt ein Warmhaltebecken 10 eines Warmhaltegerätes 11, wobei das Warmhaltegerät 11 mit einem Aufsatz 12 versehen ist, der mittels einer, hier im wesentlichen als Traverse ausgebildeten Haltevorrichtung 13 auf einem Beckenrand 14 des Warmhaltebeckens 10 angeordnet ist.

Wie aus einer Zusammenschau der **Fig. 1** und **2** zu entnehmen ist, weist der Aufsatz 12 einen Motor 15 auf, der zusammen mit einem Zwischengetriebe 16 auf der Haltevorrichtung 13 angeordnet ist. Unterhalb der Haltevorrichtung 13 befindet sich eine Pumpe 17, die über eine das Zwischengetriebe 16 mit der Pumpe 17 verbindende Antriebswelle 18 die Pumpe 17 antreibt, derart, dass über eine an die Eingangsseite der Pumpe 17 angeschlossene Ansaugleitung 19 einem im Warmhaltebecken 10 aufgenommenen Glasurmassevolumen 20 ein Fördervolumen 21 entnommen und über eine an die Ausgangsseite der Pumpe 17 angeschlossene Förderleitung 22 einer Bassinanordnung 23 zugeführt wird.

Die Bassinanordnung 23 weist zwei Glasurbecken 24, 25 auf, die jeweils als flache Schale ausgeführt sind, wobei das erste Glasurbecken 24 mit der Förderleitung 22 verbunden ist, und eine Beckenverbindung 28 des ersten Glasurbeckens 24 mit dem zweiten Glasurbecken 25 durch einander gegenüberliegend in Beckenrändern 26, 27 ausgebildeten Randausnehmungen 44, 45 ausgebildett ist. Zur Ausbildung einer Überlaufvorrichtung 29 ist das zweite Glasurbecken 25 mit einer Überlaufschwelle 30 versehen.

Wie insbesondere **Fig. 2** zeigt, weist das erste Glasurbecken 24 zur Verbindung mit der Förderleitung 22 einen in einem Beckenboden 31 ausgebildeten zentralen Zulauf 32 auf, wobei vorzugsweise der zentrale Zulauf 32, die durch die Randausnehmungen 44, 45 gebildete Beckenverbindung 28 und die durch die Überlaufschwelle 30 gebildete Überlaufvorrichtung 29 auf einer gemeinsamen Strömungsachse 33 angeordnet sind.

Wie insbesondere **Fig. 1** zu entnehmen ist, ist durch die Überlaufschwelle 30 eine Mindestfüllhöhe h vorgegeben, ab deren Überschreitung durch ein in der Bassinanordnung 23 aufgenommenes Bassinvolumen ein Ausströmen des Fördervolumens 21 aus der Bassinanordnung 23 erfolgt. Dabei kann je nach Viskosität des Glasurmassevolumens 20 und der Strömungsgeschwindigkeit des Fördervolumens 21 die Anstauhöhe des Bassinvolumens 34 größer sein als die Mindestfüllhöhe h.

Wie **Fig. 1** verdeutlicht, ist das Bassinvolumen 34 wesentlich kleiner als das im Warmhaltebecken 10 des Warmhaltegeräts 11 aufgenommene Glasurmassevolumen 20, wobei sowohl die Füllhöhe bzw. Mindestfüllhöhe h als auch eine Beckenentnahmeoberfläche 35 bzw. 36 des Glasurbeckens 24 bzw. 25 jeweils kleiner sind als eine Füllhöhe h und Glasuroberfläche 38 im Warmhaltegerät 11.

Wie **Fig. 1** zeigt, befindet sich die Pumpe 17 dicht benachbart zu einer Bodenwand 39 des Warmhaltebeckens 10, jedoch in hinreichend ausreichender Entfernung von der Bodenwand 39, um eine zu starke Aufheizung der Pumpe 17 durch die Bodenwand 39 zu verhindern. Um dennoch eine Entnahme des Fördervolumens 21 aus dem Glasurmassevolumen 20 zu ermöglichen, ist die Saugleitung 19 mit einem zur Bodenwand 39 hin geneigten Ansaugmundstück 40 versehen, das darüber hinaus einen Öffnungsquerschnitt 41 aufweist, der unter einem Ansaugwinkel α zu einer Pumpenebene P geneigt ist, wobei im vorliegenden Fall der Öffnungsquerschnitt 41 auf einen Wandübergang 42 zwischen der Bodenwand 39 und einer Seitenwand 43 des Warmhaltebeckens 10 gerichtet ist und sich in unmittelbarer Nachbarschaft zum Wandübergang 42 befindet. Vorzugsweise ist der Öffnungsquerschnitt 41 dabei senkrecht zu einer zwischen der Seitenwand 43 und der Bodenwand 39 ausgebildeten Winkelhalbierenden w ausgerichtet, um eine besonders effektive Ausnutzung der Wärmeleistung des Warmhaltegerätes 11 zu ermöglichen.

## Patentansprüche

1. Aufsatz (12) für ein Warmhaltegerät (11) zur Bildung einer Vorrichtung zum Glasieren von Backwaren, wobei das Warmhaltegerät (11) ein Warmhaltebecken (10), das zur Ausbildung einer Entnahmeoberfläche oben offen ausgebildet ist, aufweist und der Aufsatz (12) eine Pumpe (17), eine Förderleitung (22), eine Haltevorrichtung (13), mit der der Aufsatz (12) auf dem Warmhaltegerät (11) gehalten wird, und wenigstens einen Motor (15) aufweist, der die Pumpe (17) antreibt, wobei die Pumpe (17) eine Ansaugleitung (19) mit der Förderleitung (22) verbindet und die Förderleitung (22) in eine Bassinanordnung (23) einmündet, wobei die Bassinanordnung (23) zumindest ein Glasurbecken (24, 25) zur Glasurentnahme aufweist, das mit einer Überlaufvorrichtung (29) zur Rückführung eines dem Warmhaltebecken (10) entnommenen Glasurmassevolumens (20) in das Warmhaltebecken (10) versehen ist, wobei die Überlaufvorrichtung (29) zur Ausbildung einer Anstauhöhe eines temporär in der Bassinanordnung (23) aufgenommenen Bassinvolumens (34) dient.

2. Aufsatz nach Anspruch 1,
**dadurch gekennzeichnet,**
**dass** das Glasurbecken (24, 25) als flache Schale ausgebildet ist mit einer Füllhöhe h und einer durch einen Beckenrand (26, 27) begrenzten Beckenentnahmeoberfläche (35, 36), die jeweils kleiner sind als die Füllhöhe und die Entnahmeoberfläche des Warmhaltebeckens (10).

3. Aufsatz nach Anspruch 1 oder 2,
**dadurch gekennzeichnet,**
**dass** die Bassinanordnung (23) zwei Glasurbecken (24, 25) aufweist, wobei das erste Glasurbecken (24) mit der Förderleitung (22) verbunden ist, und das zweite Glasurbecken (25) das erste Glasurbecken (24) mit der Überlaufvorrichtung (29) verbindet.

4. Aufsatz nach Anspruch 3,
**dadurch gekennzeichnet,**
**dass** das erste Glasurbecken (24) einen im Beckenboden (31) ausgebildeten zentralen Zulauf (32) zur Verbindung mit der Förderleitung (22) aufweist.

5. Aufsatz nach Anspruch 3 oder 4,
**dadurch gekennzeichnet,**
**dass** die Überlaufvorrichtung (29) durch eine im Beckenrand des zweiten Glasurbeckens (25) ausgebildete, gegenüber dem Beckenrand (27) abgesenkte Überlaufschwelle (30) gebildet ist.

6. Aufsatz nach einem der Ansprüche 3 bis 5,
**dadurch gekennzeichnet,**
**dass** die Glasurbecken (24, 25) einen kreisring- oder ovalringförmigen Beckenrand (26, 27) aufweisen.

7. Aufsatz nach einem der Ansprüche 3 bis 6,
**dadurch gekennzeichnet,**
**dass** die Glasurbecken (24, 25) über ihre Beckenränder (26, 27) miteinander verbunden sind.

8. Aufsatz nach Anspruch 7,
**dadurch gekennzeichnet,**
**dass** die Beckenränder (26, 27) zur Verbindung der Glasurbecken (24, 25) einander gegenüberliegende Randausnehmungen (44, 45) aufweisen.

9. Aufsatz nach einem der vorangehenden Ansprüche,
**dadurch gekennzeichnet,**
**dass** die Ansaugleitung (19) ein Ansaugmundstück (40) mit einem Öffnungsquerschnitt (41) aufweist, der unter einem Ansaugwinkel α zu einer Pumpenebene P geneigt ist.

10. Vorrichtung zum Glasieren von Backwaren, aufweisend einen Aufsatz (12) nach einem der vorangehenden Ansprüche und ein Warmhaltegerät (11) mit einem Warmhaltebecken (10).
